(19)

**Europäisches Patentamt**
**European Patent Office**
**Office européen des brevets**

(11) **EP 3 131 021 A1**

(12) **EUROPEAN PATENT APPLICATION**

(43) Date of publication:
**15.02.2017 Bulletin 2017/07**

(51) Int Cl.:
**G06F 17/30** (2006.01)

(21) Application number: **16182056.8**

(22) Date of filing: **29.07.2016**

| | |
|---|---|
| (84) Designated Contracting States:<br>**AL AT BE BG CH CY CZ DE DK EE ES FI FR GB**<br>**GR HR HU IE IS IT LI LT LU LV MC MK MT NL NO**<br>**PL PT RO RS SE SI SK SM TR**<br>Designated Extension States:<br>**BA ME**<br>Designated Validation States:<br>**MA MD**<br><br>(30) Priority: **13.08.2015 GB 201514399**<br><br>(71) Applicant: **FUJITSU LIMITED**<br>**211-8588 Kanagawa (JP)** | (72) Inventors:<br>• **HU, Bo**<br>**Winchester, SO23 7DT (GB)**<br>• **MENDES RODRIGUES, Eduarda**<br>**Northwood, HA6 2NL (GB)**<br>• **VIEL, Emeric**<br>**78300 Poissy (FR)**<br><br>(74) Representative: **Hutchison, James**<br>**Haseltine Lake LLP**<br>**300 High Holborn**<br>**London, Greater London WC1V 7JH (GB)** |

(54) **HYBRID DATA STORAGE SYSTEM AND METHOD AND PROGRAM FOR STORING HYBRID DATA**

(57) Embodiments include a hybrid data storage system comprising: a tabular data storage system configured to store a plurality of fixed values as tabular data; and a graph data storage system configured to store a data graph; and a multi-storage logic layer unifying access mechanisms to each of the tabular data storage system and the graph data storage system; wherein each of the fixed values in the table occupies a table entry and constrains a property of a vertex in the data graph; the graph data storage system being configured to store the data graph as a plurality of vertices linked by edges, each edge linking a specified pair of vertices as a subject vertex and an object vertex, the plurality of edges including, for each of the plurality of fixed values stored by the tabular data storage system, an edge specifying the vertex for which a property is constrained by the fixed value as the subject vertex and a pointer vertex as the object vertex, the pointer vertex encoding a pointer to the table entry occupied by the fixed value.

**FIGURE 1**

**Description**

INTRODUCTION

The present invention lies in the field of data storage systems. In particular, the invention relates to systems for storing conceptual and non-conceptual data in a hybrid system.

With the growing market interest in graph-based data, a wide variety of storage solutions have been developed. These new systems fall into the following categories:

1. Native graph solution (e.g., Neo4j)
2. RDB based solution (e.g., Oracle Spatial and Graph)
3. Column-based solution (e.g.,Virtuoso)
4. Document-based solution (e.g., MongoDB)

Depending on the underlying storage, a graph storage system is normally optimised against either graph traversal transactions (from a given vertex and following graph paths to a destination) or graph scan transactions (matching against graph patterns). Traversal queries are useful for many graph/network analysis algorithms. On the other hand, scan queries are required for loading data following the same sub-graph patterns (e.g. SPARQL query evaluations, numeric feature extraction). In particular, when the data model contains heterogeneous data, including textual references and numeric data, the storage optimisation has different requirements. The former refers to mainly URIs that point to vertices in the graph model.

Since the current graph based systems are not designed to satisfy the required data formats for machine learning / data mining (i.e. N-dimensional vectors of integers, floating point, binary numbers), data needs to be pre-processed. Ideally, this pre-processing would be done incrementally, or even while data is being loaded into the system, thus optimising the pre-processing time. Current systems do not perform such kind of generic pre-processing of the data.

Therefore, significant time and system resources are required to process queries requiring aggregation of fixed value data in a graph data storage system.

Embodiments include hybrid data storage system comprising: a tabular data storage system configured to store a plurality of fixed values as tabular data; and a graph data storage system configured to store a data graph; and a multi-storage logic layer unifying access mechanisms to each of the tabular data storage system and the graph data storage system; wherein each of the fixed values in the table occupies a table entry and constrains a property of a vertex in the data graph; the graph data storage system being configured to store the data graph as a plurality of vertices linked by edges, each edge linking a specified pair of vertices as a subject vertex and an object vertex, the plurality of edges including, for each of the plurality of fixed values stored by the tabular data storage system, an edge specifying the vertex for which a property is constrained by the fixed value as the subject vertex and a pointer vertex as the object vertex, the pointer vertex encoding a pointer to the table entry occupied by the fixed value.

The graph data storage system allows storage of a rich data model that allows both a dynamic schema and of data that represents entities and relationships between these entities. In many cases, entities have numeric values associated with them, from statistical data (e.g. average income of the population of a "country" entity), to entity attributes (e.g. height and weight of a "person" entity), or a time series data points (e.g. readings from a "sensor stream" entity), to name a few. One example of such data heterogeneity is in the healthcare domain. Healthcare platforms require expressing relationships between doctors, patients, diseases, etc., while also having to maintain health measurements such as the heart rate of patients, sugar levels, and so on. On the graph model, traversal queries are usually done, but the numeric data is usually consumed by aggregation operations or analytics algorithms. For aggregation, scan queries already provided by some graph data processing systems are applicable. Scan queries, however, are not sufficient for more advanced numeric data transactions required for advanced data analytics, such as unsupervised and supervised machine learning algorithms. Such algorithms require data about entities to be computed into numeric feature vectors, which consumes time and computing resources, particularly when dealing with big data. Such feature vectors are better represented in a tabular form. Embodiments provide a hybrid data storage system which benefits from the semantic enrichment associated with graph data storage and the fast reading of ranges of data entries associated with tabular data.

Embodiments facilitate both traversal queries and scan queries by storing certain information in a data graph and certain information in tabular format. Queries (or sub-queries within a query), submitted to the multi-storage logic layer, can be allocated to either the graph data storage system or the tabular data storage system in dependence upon the data sought by the query. For example, queries which are identified as requiring an aggregation of plural pieces of numeric data can be allocated to the tabular data storage system. Queries which seek a piece of information specified in terms of its relation to a graph vertex, and thus require a graph traversal, can be allocated to the graph data storage system.

Embodiments improve a graph data storage system by allowing fixed value data to be stored according to a different schema, a tabular schema. The fixed value data are linked to the graph data via a pointer, so that they are semantically enriched. Fixed value data are identifiable in the tabular data store, for example, the subject vertex linking to the pointer vertex may be the row name. In this way, semantically related fixed data values can be accessed together in the tabular data store, and fast responses to scan queries are enabled.

The graph data storage system and the tabular data storage system each have their own access mechanisms configured to handle read and write accesses to the data stored therein. The multi-storage logic layer provides a single portal for access to both data storage systems, so that the division into separate storage systems is opaque to a user (which may be a human user or may be an application).

The hybrid data storage system may be a distributed storage system comprising a plurality of interconnected data storage units. Furthermore, either or both of the graph data storage system and the tabular data storage system may be distributed storage systems comprising a plurality of interconnected data storage units. The data storage units of the tabular data storage system and the data storage units of the graph data storage system may be distinct, or it may be that some or all of the data storage units store tabular data and graph data. Optionally, the tabular data storage system is a distributed storage apparatus comprising a plurality of concurrently accessible tabular data storage units configured to communicate with one another; and/or the graph data storage system is a distributed storage apparatus comprising a plurality of concurrently accessible graph data storage units configured to communicate with one another and each storing one or more continuous regions of the data graph.

Although the two data storage systems are distinct in terms of the schema according to which they store data, a single data storage unit may store data according to either or both schema. Indeed, some embodiments may store fixed value data on the same storage server (data storage unit) as the or each subject vertex connected by an edge to a pointer vertex pointing to the fixed value data.

At the design stage, when devising the data model for the graph data and populating the graph, the data types of vertices are declared (via class definitions) using, for instance, the XML primitive data types. Therefore, certain of the XML primitive data types are identifiable as fixed primitive values. In such embodiments, the fixed values may alternatively be referred to as fixed primitive values. The tabular data storage system may store only numeric fixed values (setting aside column and row names), so that fixed values may be limited to numeric fixed values.

A vertex represents a resource or entity, and edges linking the vertex as a subject vertex to other vertices as object vertices constrain properties of the subject vertex. The properties are constrained by the object vertex itself, information stored in the object vertex, a combination of the object vertex and a label attributed to the link between the subject vertex and the object vertex, and/or the fixed value stored in the tabular data storage occupying a table entry pointed to by a pointer encoded by a pointer vertex as object vertex.

The subject and object prefixes in relation to vertices are relative terms. For example, one vertex may be a subject in one relationship and an object in another. Edges are directional, and for the purposes of this document, the convention is that a vertex from which an edge is outgoing is the subject vertex in the context of that edge, and the destination vertex is the object vertex in the context of that edge. That is to say, a vertex is a subject vertex relative to another vertex if the vertex and the another vertex are joined by an edge from the vertex to the another vertex. Likewise, a vertex is an object vertex relative to another vertex if the vertex and the another vertex are joined (or linked/connected) by an edge from the another vertex to the vertex. A pointer vertex is only ever an object vertex, and hence may be referred to as a leaf of the data graph. Hence, phrases such as 'the subject vertex for which a property is constrained by the fixed value', could be accurately represented by 'the vertex for which a property is constrained by the fixed value'.

Embodiments may include each edge being labelled with a label defining a property of the subject vertex constrained by the object vertex, or, in a case in which the object vertex is a pointer vertex, the label defining a property of the subject vertex constrained by the fixed value occupying the table entry pointed to by the pointer.

That is to say, the graph data storage system is configured to store the data graph as a plurality of vertices linked by labelled edges, each labelled edge linking a specified pair of vertices as a subject vertex and an object vertex having a relationship defined by the label of the labelled edge, the plurality of labelled edges including, for each of the plurality of fixed values stored by the tabular data storage system, a labelled edge specifying the vertex for which a property is constrained by the fixed value as the subject vertex and a pointer vertex as the object vertex, the pointer vertex encoding a pointer to the table entry occupied by the fixed value

The tabular schema can be enhanced by, for example, the subject vertex linking to the pointer vertex may be the row name (of the table entry storing the fixed value) and the label of the labelled edge between the subject vertex and the pointer vertex being the column name. In this way, semantically related fixed data values can be accessed together in the tabular data store, and fast responses to scan queries are enabled.

The label may also be considered to represent a relationship between the resource represented by the subject vertex and the property constrained by the fixed value, or in other words, the label represents/defines/indicates a property of the subject for which property a value is constrained by the fixed value.

An edge may be stored in the form of a triple, which is a data item having three elements. The three elements are data identifying the subject vertex (S), data identifying the object vertex, which may be a pointer vertex, (O), and a

**EP 3 131 021 A1**

label defining the relationship between the two (P). The label may also be referred to as a predicate. Triples may be stored in the form <SPO>. Alternatively, indexing and data management schemes may be used in which the same triple is replicated with the elements stored in a different order.

Embodiments may include the multi-storage logic layer being configured to: wherein the multi-storage logic layer is configured to: receive, as data for storage in the hybrid data storage system, a data item specifying subject information and object information, the object information constraining a property of the subject information, and a label defining the property of the subject information constrained by the object information; identify whether or not the received object information is a numeric fixed value, and if the object information is a numeric fixed value: transfer the numeric fixed value to the tabular data store to occupy a table entry in the table of data; generate a pointer to the table entry occupied by the numeric fixed value; and transfer the subject information, the label, and the pointer to the graph data store for storage as an edge labelled with the label and linking the subject information as subject vertex to a pointer vertex encoding the pointer as object vertex.

The multi-storage logic layer may also be referred to as a management module, and may be realised by a single computing device executing a computer program causing it to function as the multi-storage logic layer. The single computing device may also comprise at least part of either or both of the graph data store and the tabular data store. Alternatively, the multi-storage logic layer may be realised by a plurality of computing devices (for example, servers or computers) operating cooperatively to realise the functionality of the multi-storage logic layer. For example, each of the plurality of computing devices may execute a computer program causing the computing device to contribute to the functionality of the multi-storage logic layer. Each of the plurality of computing devices may also comprise at least part of either or both of the graph data store and the tabular data store. Each computing device may comprise a motherboard, a computer processing unit, I/O interfaces, memory, and data storage.

The multi-storage logic layer may be configured to access the graph data storage system via a graph API and the tabular data storage system via a tabular API. The APIs define syntax for making read and write accesses to the respective data storage systems. The multi-storage logic layer may be configured to access a data model or ontological model stored as part of the graph data to look up the properties of the class instantiated by the subject vertex identified in the received subject information and to determine if values of the property identified by the received label are given as fixed values (i.e. fixed primitive values or numeric values) or as textual references. If it is the former, then the steps are followed to add the fixed value to the tabular data storage system via the tabular API and to generate a pointer. If the latter, the received information is simply added to the graph data storage system via the graph API.

In certain implementations, it may be that, in addition to data being either a fixed value or a non-fixed value, such as a textual reference, data may be identifiable to the multi-storage logic layer as a non-fixed value from which fixed value data is extractable or derivable. For example: the multi-storage logic layer may be further configured to: identify whether or not the object information is a non-numeric fixed value from which a numeric fixed value is extractable, and if the object information is a non-numeric fixed value from which a numeric fixed value is extractable: transfer the numeric fixed value to the tabular data storage system to occupy a table entry in the table of data; generate a pointer to the table entry occupied by the numeric fixed value; transfer the subject information, the label, and the pointer to the graph data storage system for storage as an edge labelled with the label and linking the subject information as subject vertex to a pointer vertex encoding the pointer as object vertex; and transfer the subject information, the label, and the non-numeric fixed value to the graph data store for storage as an edge labelled with the label and linking the subject information as subject vertex to the non-numeric fixed value as object vertex.

The multi-storage logic layer may store processing rules to be applied to received information to determine whether or not fixed values for storage in the tabular data storage system are extractable. For example, it may be that the identity of the subject vertex identified by the subject information and the property represented by the label can be used to query an ontological model stored in the data graph, based on an assumption that at design time the ontological model was populated with indicators of data types (fixed value/non-fixed value/non-fixed value from which numeric fixed values are extractable) giving values to properties of vertices belonging to particular classes.

Alternatively, it may be that absolute processing rules can be used, without prior knowledge of any ontological model, to determine the data types included in the relevant elements of the received information.

As a particular implementation of how the tabular data may be structured: the table entry occupied by the fixed value is located in a row identifiable by the subject vertex for which a property is constrained by the fixed value and in a column identifiable by the label of the edge linking the subject vertex for which a property is constrained by the fixed value to the pointer vertex encoding the pointer to the table entry occupied by the fixed value.

Advantageously, this tabular data schema provides an automated way of storing the fixed values in the table with column and row names that are semantically significant, by virtue of being extracted from the graph data, which is a semantic network. Furthermore, it results in fixed values describing the same property but from different vertices in the data graph being stored in either the same column, or in columns in different tables but with the same name. This facilitates query handling and identifying tabular data relevant to a particular vertex in the data graph.

In addition to naming conventions for rows and columns, the tabular data storage system may be configured

4

to divide the fixed values among a plurality of tables. Different approaches may be taken to the allocation of data to tables and, in distributed implementations, to the distribution of tables among the storage units. In a particular example,

In the hybrid data storage system, it may be that the tabular data storage system is configured to store a plurality of tables, the table entries of each table being occupied only by the fixed values constraining properties of a subset of the vertices stored by the graph data store; wherein membership of the subsets is determined by the number of hops from each vertex to a subset defining vertex for each subset, wherein membership of each subset is limited to those vertices with n-hops of the subset defining vertex for the subset, with n being a predetermined positive integer.

Advantageously, such embodiments take advantage of the nature of graph data, that is, that semantically linked concepts or resources will neighbour one another or be within a small number of hops of one another, to structure the data stored by the tabular storage system and ensure that fixed values relating to semantically linked concepts will tend to be stored in the same table. Of course, embodiments are not restricted to storing only one instance of each fixed value, so a fixed value can be included in more than one table. Subset defining vertices may be, for example, vertices at a particular level in the hierarchy, vertices which have historically been accessed more frequently than average (or more than a threshold amount or proportion above the average), highest order vertices, or vertices at the centre of a cluster (a cluster being a sub-region of the data graph treated as indivisible for storage purposes).

The tabular data storage system may be configured to ensure that each individual table is stored within a single physical disk or on the same storage unit.

As a further example of how the subset defining vertices may be selected: the graph data storage system may comprise a subset defining module, configured to select subset defining vertices by sorting the vertices in order of betweenness centrality, and selecting the vertices with the highest betweenness centrality as subset defining vertices.

The highest may be the first m vertices when the vertices are ranked in descending order of betweenness centrality, wherein m may be a predetermined value, or may be calculated as a predetermined proportion of the total number of vertices in the data graph (for example, the top 10% or top 20%). Alternatively, a threshold value of betweenness centrality may be defined, and vertices having a value of betweenness centrality equal to or greater than the threshold selected as subset defining vertices. An additional table may be composed of fixed values from vertices not within the n-hops of a subset-defining vertex. The number of hops between two vertices is the number of edges on the shortest path from one vertex to the other. In some embodiments, hops may only be counted as either incoming or outgoing edges.

Betweenness centrality may be determined relative to the entire graph, relative to vertices in a particular cluster, or relative to all vertices stored on the same data storage unit. Betweenness centrality can be computed before hand against the entire graph. This can help to highlight which vertices are likely to be used in queries and prepare the tabular representations of them.

In a particular example: the graph data storage system may be configured to store the graph across a plurality of storage units, each storage unit being configured to store one or more partitions, a partition being a continuous region of the data graph; and the graph data storage system may comprise a subset defining module, configured to select subset defining vertices for each partition by sorting the vertices in order of betweenness centrality for pairs of vertices within the partition, and to select the vertices with the highest betweenness centrality as subset defining vertices for the partition.

As a further example of how subset defining vertices may be selected: the graph data storage system may comprise a subset defining module, the subset defining module being configured to receive a list of data types to which read accesses are made when executing a particular machine learning algorithm, to rank the vertices in the data graph according to the proportion of edges from the vertex that define a property belonging to the list of data types out of the total number of edges linking to the vertex; and to select the highest ranked vertices as subset defining vertices.

Advantageously, such embodiments tailor the tables for quick access by the particular machine learning algorithm, by putting vertices of most interest to the machine learning algorithm at the centre of subsets of vertices whose fixed values compose a single table, so that queries for fixed values relating both to the vertex of most interest and its neighbours (and neighbour's neighbours etc etc) need only access a single table.

The selection of subset defining vertices may be performed once at initiation of the hybrid database and then refreshed intermittently, according to resource availability, extent of changes made to the data graph, and /or elapsed time since initiation. In addition, some dynamic modification of table structure may be performed with a view to reducing queries that cross boundaries between individual tables. As an example of how such dynamic modification may be performed: the tabular data storage system further comprises: a query monitor, the query monitor being configured to maintain a record of, for each query accessing the tabular data store, which table or tables are accessed; and a table merger, the table merger module being configured to identify, based on the record maintained by the query monitor, groups of more than one table from among the plurality of tables for which instances of the tables in the group being accessed in the same query satisfy a merging criterion, and merging the tables in the group into a single table in the tabular data store.

The merging criterion may be, for example, the tables in the group being accessed in the same query a threshold number of instances (which may be out of the most recent x (wherein x is a positive integer, such as 1000) queries), and/or the first n (wherein n is a positive integer) most frequently accessed groups (which may be out of a limited set of queries, for example, the most recent x), and/or based on a metric which places greater significance on more recent queries than less recent queries and scores a group based on the queries in which the tables of the group were accessed together.

Although the query monitor and table merger are attributed to the tabular data storage system, they may be provided as part of a management system or management module that handles queries, the recording thereof, and data structure modifications for both the data graph and the tabular data.

The pointer vertex stores instructions enabling the entity responsible for query handling to retrieve a fixed value from the tabular data storage system. The semantic significance of the fixed data value is represented by the placement of the pointer vertex within the data graph and its connecting edges, and the raw fixed value data constraining ranges of the property represented by the pointer vertex are constrained by the fixed value or values in the tabular data storage system. As a particular example of the information that may be encoded by a pointer vertex: the pointer vertex encodes information specifying a table in the tabular data store, and a row and a column within the specified table.

The information encoded by the pointer vertex may be stored as a triple, that is, a data item having three individual elements each having a value, wherein the three values are a specification of a table: for example, by an address or table ID; a specification of a column, for example by a numeric reference or name; and a specification of a row, for example, by a numeric reference or name. The form of the encoded pointers may be consistent across the entire data storage system. The pointer vertices may include an indication that they are pointer vertices, or it may be recognisable from the information encoded in the vertex whether or not the vertex is a pointer vertex. That is to say, it would be unusual to find a triple in a vertex, so it may be assumed that a vertex represented by a triple is a pointer vertex.

Embodiments may also include a data storage system comprising a management module, a graph data storage apparatus configured to store a data graph, and a tabular data storage apparatus configured to store a table of data, wherein: the management module is configured to: receive a triple for storage in the data graph, the triple comprising subject information, predicate information, and object information, the object information constraining a range of a property identified by the predicate information of a resource represented by the subject information; and if the object information includes a literal constraining the property to a fixed value, to transfer the fixed value to the table, and to transfer the triple to the data graph with a pointer to the fixed value in the tabular data storage replacing the object information.

In a particular example, the management module is configured to identify if the literal is a non-numeric literal from which a fixed value is extractable, to extract the fixed value from the literal for transfer to the tabular data storage, and to transfer the triple to the graph data storage apparatus in two forms: one with the object information as received; and one with a pointer to the fixed value in the tabular data storage replacing the object information.

In embodiments, if the received object information includes a literal representing a fixed value, that is, constraining the relevant property to a fixed value, the multi-storage logic layer, or management module, is configured to transfer to the graph data storage, as a triple: the subject information, the predicate information, and a pointer to the fixed value in the tabular data storage. The subject information is transferred as the subject of a triple, the predicate information as the predicate of the triple, and the pointer to the fixed value in the tabular data storage as the object of the triple.

Embodiments of another aspect include: a hybrid data storage method comprising: at a tabular data storage system, storing a table of fixed values; at a graph data storage system, storing a data graph; at a multi-storage logic layer, controlling access to each of the tabular data storage system and the graph data storage system via respective access mechanisms; wherein each of the fixed values in the table occupies a table entry and constrains a property of a vertex in the data graph; and wherein storing the data graph comprises storing the data graph as a plurality of vertices linked by edges, each edge linking a specified pair of vertices as a subject vertex and an object vertex, the plurality of edges including, for each fixed value, an edge specifying the vertex for which a property is constrained by the fixed value as the subject vertex and a pointer vertex as the object vertex, the pointer vertex encoding a pointer to the table entry occupied by the fixed value.

Embodiments of another aspect include a computer program which, when executed by a computing apparatus, causes the computing apparatus to become a data storage system embodying the present invention.

Embodiments of another aspect include a computer program which, when executed by a computing apparatus, causes the computing apparatus to perform a method embodying the present invention.

The computer program may be stored on a storage medium. For example, the computer program may be stored on a non-transitory storage medium.

The computer program may be stored on a storage medium. For example, the computer program may be stored on a non-transitory storage medium.

A computing apparatus in the above embodiments includes one or more computing devices each comprising a processor, memory, I/O interface, and optionally a display unit and components for accepting user inputs. The computing apparatus may be a single computer, or a network of computers connectable via a network for exchange of data with one another, the network of computers may be configured to cooperatively realise functionality of modules such as the management module and its component modules.

Embodiments will now be described in detail, with reference to the accompanying drawings, in which:

Figure 1 illustrates a hybrid data storage apparatus 10 embodying the present invention;
Figure 2 illustrates a subset of a data graph;
Figure 3 illustrates an exemplary server architecture of an individual server forming all or part of a hybrid data storage system;
Figure 4 illustrates a subset of graph data from which fixed data values are extractable; and
Figure 5 illustrates a hardware architecture of an embodiment.

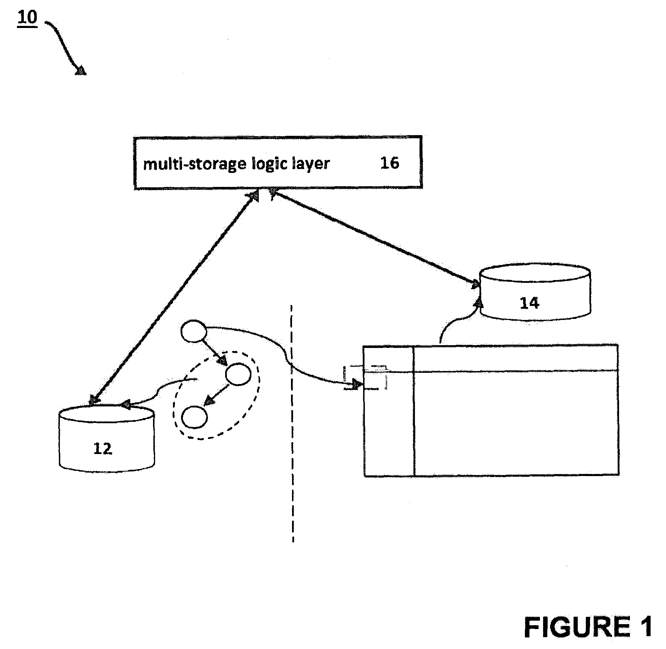

Figure 1 illustrates a hybrid data storage apparatus 10 (which may also be referred to as a hybrid data storage system) embodying the present invention. The apparatus 10 comprises a graph data storage system 12, a tabular data storage system 14, and a multi-storage logic layer 16. Data are managed using mainly the graph data storage system 12 while some data are chosen for being stored in the tabular data storage system 14 instead. For instance, raw numeric data or numeric data that is extracted from the graph using a pre-defined procedure (examples of fixed values and fixed value data) can be stored in the tabular data storage system 14 for easy access by, for example, specialist numeric analytic algorithms. These data are injected from the graph data storage system 12 to the tabular data storage system 14, to be used as input of one or multiple analytics processes, e.g., as part of machine learning data flows.

In terms of hardware components, the apparatus 10 may be considered to be a computing device comprising a data storage apparatus, a processor, and a memory. However, the apparatus 10 may also be realised by a plurality of such devices operating in cooperation with one another. Each of the data storage systems may be realised by a distinct computing device or distinct devices, alternatively, the tabular data storage system 14 and the graph data storage system 12 may employ hardware resources on the same computing device or devices. The multi-storage logic layer 16 may be provided as a software service running on a single computing device or on a plurality of computing devices. For example, if the apparatus is a distributed computing environment, each of the computing devices providing storage resources for the data storage systems may run software embodying the multi-storage logic layer 16. The computing devices may be, for example, data storage servers.

The graph data storage system 12 comprises one or more data storage units, and a graph data management system. The graph data management system is responsible for, inter alia, functions such as read and write accesses to the graph data, division of the graph into clusters/partitions and distribution of those clusters among the physical data storage units, data replication and redundancy (for fault tolerance and/or query response optimisation), identifying data values that are fixed data values suitable for storage in the tabular data storage system 14, formation and storage of pointer vertices, graph query handling, and query monitoring and recording.

It may be that the data graph is encoded as triples, for example, RDF triples, and that a vertex is defined by the triples in which it is named as the subject. A graph partition is a subset of the data graph, or a sub-graph, and is a portion or region of the data graph, optionally graph partitions may be limited to being continuous portions or regions of the data graph. A graph partition may comprise interconnected vertices only, or may comprise vertices which are not connected to one another.

An exemplary form of stored data for encoding a data graph is triples, and in particular RDF triples. Triples provide for encoding of graph data by characterising the graph data as a plurality of subject-predicate-object expressions. In that context, the subject and object are graph vertices/nodes/resources of the graph data, and as such are entities, vertices, resources, instances, or concepts, and the predicate is a representation of a relationship between the subject and the object. The predicate asserts something about the subject by providing a specified type of link to the object. For example, the subject may denote a Web resource (for example, via a URI), the predicate denote a particular trait, characteristic, or aspect of the resource, and the object denote an instance of that trait, characteristic, or aspect. In other words, a collection of triple statements intrinsically represents directional graph data. The RDF standard provides a formalised structure for such triples.

The graph data storage system 12 of the hybrid data storage apparatus may include a graph data manager or graph database management system which is configured to scan the graph data and collect the any data values in a format meeting the fixed value definition for the implementation. For example, it may be that numeric data are counted as fixed values. If computing resource permits, the graph database management system is configured to scan across the entire graph data model, extract the numeric data, transfer the numeric data to the tabular data storage system 14 for storage therein, and replace the extracted data in the data graph with a pointer to the pertinent table entry. Latency resulted by disk I/O is one of the bottlenecks in the training phase of machine learning processes. Storing numeric data in the tabular data storage system 14 facilitates range disk read for numeric values to avoid frequent disk I/O.

When collecting numeric data from the original data model stored in the Graph Storage, or when data is being collected as a stream, when inserted into the system, new numerical features may need to be derived based on the numeric or non-numeric data properties.

Non numeric data are stored in vertex-centric (resource-centric) approach. A typical example is illustrated in the following expression. A typical Graph Storage format of vertex A is using an adjacency list as follows: where both inbound and outbound edges can be referred.

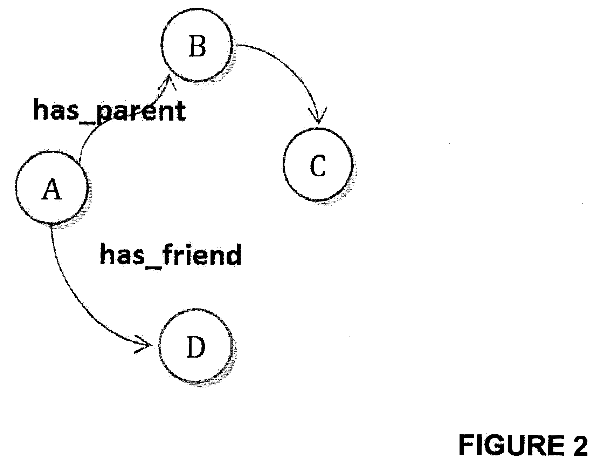

A: (has_parent, B), (has_friend, D). A data graph representation of vertex A is illustrated in Figure 2.

In this vertex-centric graph data model, edges refer to a dereferenceable vertex (e.g. B and D in the expression). When the destination (also referred to as Right Hand Side or RHS entity of the edge) is a numeric value, a pointer, stored a s a pointer vertex, will be used to replace the vertex.

Each of these pointers can point to i) the physical location (being machine ID, segment ID, or disk address offset) from where the numeric data value can be found and/or ii) the logic location (e.g. the column and row coordinates of the numeric value for RDB storage solution). Whether relying on direct disk access or access via a logic location depends on the implementation needs and efficiency of data indexing. The basic requirement is that the point/reference must provide details to the multi-storage logic layer 16 on how the data are stored and accessed.

The tabular data storage system 14 comprises one or more data storage units, and a tabular data management system. The tabular data management system is responsible for, inter alia, functions such as read and write accesses to the tabular data, division of the tabular data into individual tables and distribution of those individual tables among the physical data storage units, data replication and redundancy (for fault tolerance and/or query response optimisation), table merging, formation and modification of tables, tabular data query handling, and query monitoring and recording.

The tabular data storage system 14 is configured to store fixed values, which may be limited to fixed numeric values, extracted from the data stored in the data graph, and/or extracted from data being for writing to the data graph prior to the writing. The tabular data storage system 14 and its entries are referencable by pointer vertices stored in the graph data storage system 12. A fixed data value is replaced in the graph data by a pointer vertex encoding a pointer to an entry in the tabular data storage system 14. The pointer may have three elements, table, column, and row, identifying a single entry in a particular table. Alternatively, column and/or row may be represented by a range so that a range of table entries is identified by the pointer.

The multi-storage logic layer 16 unifies the access mechanisms to the graph data storage system 12 and the tabular data storage system 14 so that the hybrid data are accessible by users via a single portal. For example, APIs may govern the syntax for accessing (reading, writing, querying) the graph data storage system 12 and the tabular data storage system 14, and the multi-storage logic layer 16 is configured to receive requests to access the hybrid data and to divide the received requests into two sub-requests, one for each data storage system, and cast in the format/syntax determined by the respective API. Effectively, the multi-storage logic layer 16 unifies the graph data management system and the tabular data management system so that it appears to users and upper layers as though there is only a single management system.

The multi-storage logic layer 16, the graph data management system, and the tabular data management system may each be realised by instructions or executable program code which, when executed by a computing device, cause the computing device to perform the functionality attributed to the respective entity. The computing device may comprise a computer processing unit operating in collaboration with one or more of memory, storage, I/O devices, network interfaces, sensors (either via an operating system or otherwise), and other components of a computing device, in order to realise the functionality attributed to the respective entity.

The multi-storage logic layer 16 unites access to two distinct storage schemata optimised for different types of data.

For graph-based data, a vertex-centric storage solution is implemented by the graph data storage system 12. Data are indexed by the IDs or labels of the vertices which are stored together with the outbound edges (and, in most cases, the inbound edges) as adjacency lists. All data stored by the hybrid data storage apparatus can be represented in the data graph. However, in order to optimise the hybrid system for access by different routines and query mechanisms, certain fixed value data are extracted and stored in a tabular data storage system 14.

Depending on the types of the RHS of the edges (or the destination or object of the edges), two different approaches can be taken. If the destination is a resource (a graph vertex, or textual reference), similar vertex-centric storage solution is employed. If the destination is a fixed value, such as a numeric value, a pointer replaces the actual value, and the numeric value is added to the tabular data storage system 14. If the destination is a numeric or non-numeric literal from which numeric features can be extracted through pre-processing, the literal remains in the graph and a new edge is created (from the vertex containing the literal) to a new pointer vertex that will contain the pointer.

Pointers may have the following format: ($T$, $C$, $R$). $T$ is a universal ID of the table where the fixed data values are stored. This ID can be a URL or any other kind of format that uniquely identifies a table (for instance if we use the Hadoop File System (HDFS), the ID would be point to a file in the HDFS in the format "hdfs://machine.name/folder/filename"). $C$ is a range of columns where the numeric data are stored. R is the range of rows where the data are stored. The column and row ranges can be narrowed down to 1 pointing to a single cell. They can also present part of a table or even the entire table. By doing this, all the numeric data are stored logically in a homogeneous tabular format. A machine learning / data mining algorithm seeking to interrogate the hybrid data storage apparatus can perform range bulk loading (column- or row-based) for batch processing, instead of incurring frequent disk I/O.

One data model or ontology can contain multiple tables, that is, multiple different tables in the tabular data storage system 14 can be used to store the fixed values extracted from a single continuous data graph stored by the graph data storage system 12.

A tabular data manager, or tabular database management system, is configured to manage the distribution of fixed value data among tables, and thus to manage the creation of tables. Depending on the implementation, different approaches to table creation may be taken by the tabular database management system. For example, the creation of tables can be made statically based on prior knowledge of the application domain (e.g. what kind of queries are likely to be issued by the numeric data processing algorithms). In this case, the data can be appended to a single table both vertically (more records and/or instances) and horizontally (more features). A column can be directly mapped to an edge or a vertex attribute in the graph model.

On the other hand, a dynamic approach can be taken to table creation and management by the tabular database management system. The dynamic table construction approach is based on the following assumptions:

1.The storage of the tabular data is optimised to obtain a good trade-off between bias and variance and to ensure balanced training samples for incremental learning algorithms. This prevents over-fitting the model to a particular class.

2. It is beneficial to store numeric data of similar nature together. This can facilitate optimisation methods, e.g. data compression. For instance, data can be stored as difference only to reduce disk footprint where actual numeric value can be generated when data is read.

3. The relevance of data is query-specific. It is possible to periodically review such grouping and performing updates accordingly.

Heuristics to be used by the tabular database management system in constructing initial table structure include:

1. *N-Hop* based. In order to control the size of each table as well as reduce data reshuffling, an n-hop, such as 2-hop or 3-hop (from a given graph vertex, such as a subset defining vertex), table should be used:

a. Sort the vertices based on, for example betweenness centrality, where betweenness indicates the significance of vertices based on their occurrence on shortest paths between pairs of vertices in the graph.

b. Create separate tables for each centre togther with numeric values from N-hops, bearing in mind that each fixed value may be stored in more than one table.

2. *Density based.* Vertices with high degree centrality are treated as separate tables to collect as many as possible conceptually related data together.

a. Sort the vertices based on the proportion between vertex degree and edges with relevant information to the machine learning algorithms. The machine learning algorithms' historical query records can be consulted, or information relevant to machine learning algorithms seeking to access the hybrid data storage apparatus can otherwise be determined. Both numeric and non-numeric value data can be considered closely relevant to a machine learning algorithm. Therefore, it can be the case that a table contains both numeric values and those non-numeric (symbolic) values that are considered critical to the learning algorithms (e.g. as class labels for training).

3. *Cluster based.* Graph partitioning algorithm (e.g. based on modularity maximization objective function) is applied.

a. Vertices are clustered into coherent clusters, maximizing the intra-cluster edges and minimizing the inter-cluster edges

b. Vertices within each cluster are sorted by closeness centrality to determine the most connected nodes.

Exactly which approach should be taken (or a combination of approaches) is graph model specific. Data in the same table may be stored in the same physical disk (or the same disk segment) to facilitate bulk loading into memory.

Once the storage system is in use, the actual query patterns can be used to optimise the logic grouping which in turn is reflected in the physical data location. For instance, if single queries frequently cross boundaries between particular tables, at the system idle time, data falling in such query patterns should be merged into one logic table. This may be by creation of a new table in addition to the existing tables, or by re-assigning boundaries between tables. Significance of query patterns can be decided according to the Most Frequently Used (MFU) or the Most Recently Used (MRU).

As an individual table grows, it can be divided into multiple individual tables across different servers. If the table does not grow too much horizontally (i.e., a limited number of columns), the table can be sliced horizontally. Each node of the cluster will have a subset of complete records.

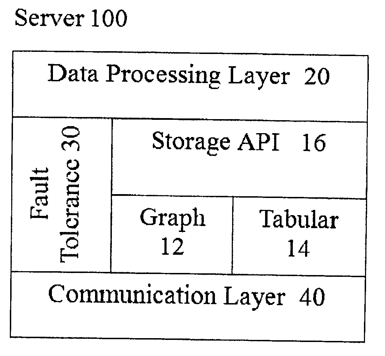

Figure 3 illustrates an exemplary server architecture of an individual server forming all or part of a hybrid data storage apparatus. It may that the server 100 of Figure 3 is one of multiple such servers in communication with one another via their respective communication layers 40 and forming a distributed hybrid data storage apparatus.

The fault tolerance module 30 is configured to manage replication of stored data to provide tolerance to faults in particular storage locations. The communication layer 40 is configured to communicate with other servers 100 in the hybrid data storage apparatus and thereby to facilitate query processing across server boundaries.

The storage system is composed of (and encapsulates) two types of storage: graph data storage, via the graph data storage system 12, and tabular data storage, via the tabular data storage system 14. The two storage systems are exposed to the upper layer through two APIs, the graph API and the tabular API, unified via the multi-storage logic layer 16, which may also be referred to as the storage API. The multi-storage logic layer 16 has two functions: first of all, expose to the upper layer the necessary APIs for both graph operations and table operations (e.g. training a classifier). Secondly, it is to hide from the upper layers the logic of how relevant data is mapped between properties in graphs and tables/columns in the tabular storage.

The hybrid data storage apparatus supports efficient traversal queries and efficient scan queries.

Traversal queries are well supported by the graph data storage system 12 which can be enhanced by adaptive locality methods, that is, by the graph data management system performing adaptive partitioning and distribution of partitions among physical servers based on historical query records. For instance, a query of "$A \to B \to C \to D$" presents a graph path from "A" as the starting vertex. For instance, traverse query is used to "find the favourite food of the best friend of my best friend".

Scan queries, in particular those targeted at aggregated results of fixed values, such as numeric and/or symbolic values, are well supported by the tabular data storage system 14. For instance, a query of "finding the average salary of my grandfather during the period when he was between 30-40 years old" can result in a range query loading all the numeric values from a particular table storing "my grandfather's salary numbers". Aggregation can then be done in memory. Special constructs may be necessary for such queries. For instance, the above query can be expressed using a hybrid or extended abstraction as:

```
avg (X.has_parent.has_parent.has_salary,
     range(X.has_parent.has_has_parent.has_age=30,
        X.has_parent.has_parent.has_age = 40))
```

Where an aggregation operator takes two parameters: 1) the index of data to be aggregated and 2) the range of data to be (bulk) loaded. Queries requiring aggregation can be identified by the multi-storage logic layer 16 and allocated to the tabular data management system. Queries requiring a graph traversal can be identified by the multi-storage logic layer 16 and allocated to the graph data management system. Composite queries requiring graph traversal and fixed value aggregation can be divided into sub-queries and allocated to the relevant management system.

The hybrid data storage apparatus effectively leverages the data graph as a data index for efficient fixed value data access to the tabular storage. It exposes a graph API for both reads and writes. Note that numeric data are normally stored as leaves of a graph (here we define leaves of the graph model as those vertices with only inbound edges, i.e. out-degree = 0). Let $G$ be the graph storage and $T$ the tabular storage.

1. Let $L(g)$ be the set of leaves of graph g, $N(g) \subseteq L(g)$ the set of numeric leaves, $p(q) = v_0,..,v_n$ be the traverse path incurred by query $q$, and $eval(q)$ the evaluation of $q$,
For every $v_i \in p(q)$,

$$\text{if } v_i \notin L(g),\ eval(q) = eval(q) \cup \{v_i, (v_{i-1}, v_i)\};$$

$$\text{if } v_i \in L(g),\ eval(q) = eval(q) \cup \{(v_{i-1}, v_i), \sigma(v_i)\}.$$

That is to say, graph traversal is primarily handled by the graph storage when the query evaluation reaches the leaves, if the value is a reference to the tabular storage, a selection transaction is performed based on the reference.
2. When writing or updating the graph with edge $(v, v')$, if $v' \in N$,

$$v'' = \mathrm{m}(v') \wedge g = g \cup \langle v, v'' \rangle \wedge L(g) = L(g) \cup v' \wedge t \leftarrow t \cup \{v'' \Rightarrow v'\}$$

That is to say, updates on the graph side can lead to the creation of a reference and the update of the set of leaves of the graph. Subsequently, a mapping is created between the reference and the actually value which is used to updated the table.

As a particular example, the tabular data storage system 14 can be implemented as multiple-read and single-write system to avoid data inconsistencies.

In such a hybrid solution, the tabular data structure can facilitate fast bulk loading for a range of data analytics processes, including supervised and unsupervised learning. The vertex-centric graph storage may also perform adaptive locality-based storage optimisation.

When fixed value data, such as numeric data, are used extensively in a data model and when training and retraining using machine-learning algorithms happens very frequently, requiring bulk loading on a frequent basis, performance bottlenecks are avoided by having numeric data accessible via a tabular data storage system 14. Fixed value data can also be timed data series such as heart beats and stock prices, but need also a rich and dynamic schema to enrich the data.

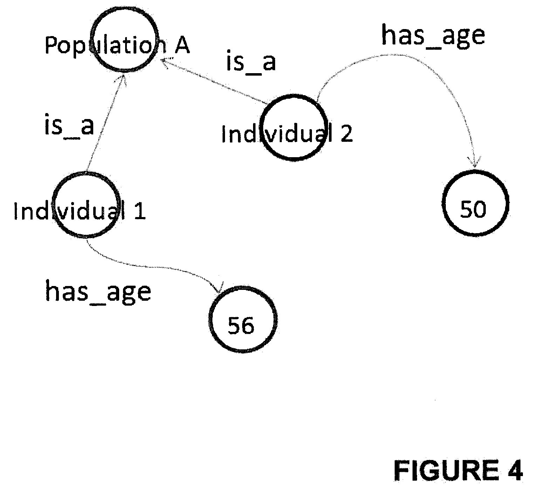

For instance, assume one needs to analyse the age profiles of a sub-population. Depending on the actual data model, typically a concept-centric or class-centric approach will present individuals as instances of classes defining the sub population and present the age as the property filler of a concrete property of the instance. E.g. the one presented in Figure 4.

In order to load the numeric age values for processing, e.g. aggregation transaction, one graph scan query (to find all instance of the population) and two graph traverse queries (for each instance) would be required. This would result in a minimum 3 random disk access (read) to read each individual's age. On the other hand, by extracting the numeric age data and pre-locating the data in a table based on the conceptual graph structure, ages can be located together and indexed by population and individual. When reading the data, a fragment of data can be read together. This will significantly reduce I/O latency caused by random disk seeking at minimum 4ms per random access. In typical machine learning scenario, the data to be loaded are normally of 1,000-10,000, costing overall 4-40 seconds extra.

The following benefits are evident:

1. For resource/vertex data, flexible adaptive locality can be applied.
2. Numeric data are stored in a dedicated (logic) table for bulk loading. The data store is homogeneous and thus can be optimised accordingly (e.g. apply compression methods on numeric data to reduce the size).
3. Aggregation results of numeric data can be cached for fast access.
4. Part of the data (numeric) is loaded into a tabular form while new triples are inserted into the graph. This means that data is immediately available for data analysis, avoiding additional pre-processing time, typical of such systems. This greatly improves performance of the overall system.
5. By making data available to machine learning algorithms, new data can be learned and derived from the results of these algorithms. This new data can be feed back into the graph, enriching the data store.
6. Some of the new data can be numeric or generally relevant to machine learning algorithms. In this case, more data (new columns) will be added to the tabular form, making it available for (other) machine learning algorithms.

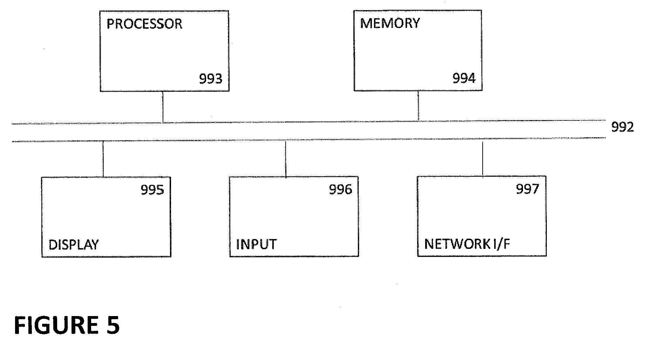

FIGURE 5 is a block diagram of a computing device, such as a hybrid data storage system, or a data storage server forming part of said system, which embodies the present invention, and which may be used to implement a hybrid data storage method of an embodiment. The computing device comprises a processor 993, and memory, 994. Optionally, the computing device also includes a network interface 997 for communication with other computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices). The memory may provide the storage for the tabular data of data graph stored in the hybrid data storage system.

The processor 993 is configured to control the computing device and execute processing operations, for example executing code stored in the memory to implement the various different functions of the tabular data storage system, the graph data storage system, and the multi-storage logic layer described here and in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 997 may display a representation of data stored by the computing device and may also display a cursor and dialog boxes and screens enabling interaction between a user and the programs and data stored on the computing device. The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

The tabular data storage system 14 of Figures 1 & 3 may be memory 994 and a processor 993 (or plurality thereof) executing processing instructions (a program) stored on the memory 994 and exchanging data via a network I/F 997 or other communication gateway. In particular, the processor 993 executes processing instructions to receive, via the network I/F, fixed values for storage as tabular data from the multi-storage logic layer, and to store the received fixed values. Furthermore, the processor 993 may execute processing instructions to transmit, via the network I/F 997, data stored by the tabular data storage system 14 and requested via a read request to the multi-storage logic layer for returning as a query result.

The graph data storage system 12 of Figures 1 & 3 may be memory 994 and a processor 993 (or plurality thereof) executing processing instructions (a program) stored on the memory 994 and exchanging data via a network I/F 997 or other communication gateway. In particular, the processor 993 executes processing instructions to receive, via the network I/F, graph data for storage as a data graph from the multi-storage logic layer, and to store the received graph data. Furthermore, the processor 993 may execute processing instructions to transmit, via the network I/F 997, data stored by the graph data storage system 12 and requested via a read request to the multi-storage logic layer for returning as a query result. The processor 993 of the graph data storage system 12 executes processing to store on the memory 994 the data graph as a plurality of vertices linked by edges, each edge linking a specified pair of vertices as a subject vertex and an object vertex, the plurality of edges including, for each of the plurality of fixed values stored by the tabular data storage system, an edge specifying the vertex for which a property is constrained by the fixed value as the subject vertex and a pointer vertex as the object vertex, the pointer vertex encoding a pointer to the table entry occupied by the fixed value.

The multi storage logic layer 16 of Figure 1 may be a processor 993 (or plurality thereof) executing processing instructions (a program) stored on a memory 994 and exchanging data via a network I/F 997. In particular, the processor 993 executes processing instructions to receive, via the network I/F, requests for data from the data processing layer, and to process the request, and/or to transmit requested data, via the network I/F 997, to the data processing layer.

The query monitor may be a processor 993 (or plurality thereof) executing processing instructions (a program) stored on a memory 994 and exchanging data via a network I/F 997. In particular, the processor 993 executes processing instructions to receive, via the network I/F, each query accessing the tabular data store and to add a record of the query to the maintained record of which tables are accessed by which queries. Furthermore, the processor 993 may execute processing instructions to store the maintained record on a connected storage unit and/or to transmit, via the network I/F 997, the maintained record to the table merger for determining whether any groups of tables meet the merging criterion.

The table merger may be a processor 993 (or plurality thereof) executing processing instructions (a program) stored on a memory 994 and exchanging data via a network I/F 997. In particular, the processor 993 executes processing instructions to receive, via the network I/F, the maintained record of queries to tables from the query monitor and determine groups of more than one table from among the plurality of tables for which instances of the tables in the group being accessed in the same query satisfy a merging criterion, and merging the tables in the group into a single table in the tabular data store.

Methods embodying the present invention may'be carried out on a computing device such as that illustrated in Figure 5. Such a computing device need not have every component illustrated in Figure 5, and may be composed of a subset of those components. A method embodying the present invention may be carried out by a single computing device, functioning as a multi-storage logic layer 16, in communication with one or more data storage servers via a network. The computing device may be a data storage itself storing some of the graph data and tabular data stored by the hybrid storage system.

A method embodying the present invention may be carried out by a plurality of computing devices operating in cooperation with one another. One or more of the plurality of computing devices may be a data storage server storing at least a portion of the graph data and tabular data stored by the hybrid data storage system.

**Claims**

1.  A hybrid data storage system comprising:

    a tabular data storage system configured to store a plurality of fixed values as tabular data;
    a graph data storage system configured to store a data graph; and
    a multi-storage logic layer unifying access mechanisms to each of the tabular data storage system and the graph data storage system;
    wherein each of the fixed values in the table occupies a table entry and constrains a property of a vertex in the data graph;
    the graph data storage system being configured to store the data graph as a plurality of vertices linked by edges, each edge linking a specified pair of vertices as a subject vertex and an object vertex, the plurality of edges including, for each of the plurality of fixed values stored by the tabular data storage system, an edge specifying the vertex for which a property is constrained by the fixed value as the subject vertex and a pointer vertex as the object vertex, the pointer vertex encoding a pointer to the table entry occupied by the fixed value.

2.  A hybrid data storage system according to claim 1, each edge being labelled with a label defining a property of the subject vertex constrained by the object vertex, or, in a case in which the object vertex is a pointer vertex, the label defining a property of the subject vertex constrained by the fixed value occupying the table entry pointed to by the pointer.

3.  A hybrid data storage system according to claim 1 or 2, wherein the multi-storage logic layer is configured to:

    receive, as data for storage in the hybrid data storage system, a data item specifying subject information and object information, the object information constraining a property of the subject information, and a label defining the property of the subject information constrained by the object information;
    identify whether or not the received object information is a numeric fixed value, and if the object information is a numeric fixed value:

    transfer the numeric fixed value to the tabular data store to occupy a table entry in the table of data;
    generate a pointer to the table entry occupied by the numeric fixed value; and
    transfer the subject information, the label, and the pointer to the graph data store for storage as an edge labelled with the label and linking the subject information as subject vertex to a pointer vertex encoding the pointer as object vertex.

4.  A hybrid data storage system according to claim 3, the multi-storage logic layer being further configured to:

    identify whether or not the object information is a non-numeric fixed value from which a numeric fixed value is extractable, and if the object information is a non-numeric fixed value from which a numeric fixed value is extractable:

    transfer the numeric fixed value to the tabular data storage system to occupy a table entry in the table of data;
    generate a pointer to the table entry occupied by the numeric fixed value;
    transfer the subject information, the label, and the pointer to the graph data storage system for storage as an edge labelled with the label and linking the subject information as subject vertex to a pointer vertex encoding the pointer as object vertex; and

transfer the subject information, the label, and the non-numeric fixed value to the graph data store for storage as an edge labelled with the label and linking the subject information as subject vertex to the non-numeric fixed value as object vertex.

5. A hybrid data storage system according to claim 2, wherein
the table entry occupied by the fixed value is located in a row identifiable by the subject vertex for which a property is constrained by the fixed value and in a column identifiable by the label of the edge linking the subject vertex for which a property is constrained by the fixed value to the pointer vertex encoding the pointer to the table entry occupied by the fixed value.

6. A hybrid data storage system according to any of the preceding claims, wherein
the tabular data storage system is configured to store a plurality of tables, the table entries of each table being occupied only by the fixed values constraining properties of a subset of the vertices stored by the graph data store; wherein
membership of the subsets is determined by the number of hops from each vertex to a subset defining vertex for each subset, wherein membership of each subset is limited to those vertices with n-hops of the subset defining vertex for the subset, with n being a predetermined positive integer.

7. A hybrid data storage system according to claim 6, wherein
the graph data storage system comprises a subset defining module, configured to select subset defining vertices by sorting the vertices in order of betweenness centrality, and selecting the vertices with the highest betweenness centrality as subset defining vertices.

8. A hybrid data storage system according to any of the preceding claims, wherein the graph data storage system is configured to store the graph across a plurality of storage units, each storage unit being configured to store one or more partitions, a partition being a continuous region of the data graph; and
the graph data storage system comprising a subset defining module, configured to select subset defining vertices for each partition by sorting the vertices in order of betweenness centrality for pairs of vertices within the partition, and to select the vertices with the highest betweenness centrality as subset defining vertices for the partition.

9. A hybrid data storage system according to claim 6, wherein the graph data storage system comprises a subset defining module, the subset defining module being configured to receive a list of data types to which read accesses are made when executing a particular machine learning algorithm, to rank the vertices in the data graph according to the proportion of edges from the vertex that define a property belonging to the list of data types out of the total number of edges linking to the vertex; and to select the highest ranked vertices as subset defining vertices.

10. A hybrid data storage system according to any of claims 6 to 9, wherein the tabular data storage system further comprises:

a query monitor, the query monitor being configured to maintain a record of, for each query accessing the tabular data store, which table or tables are accessed; and
a table merger, the table merger module being configured to identify, based on the record maintained by the query monitor, groups of more than one table from among the plurality of tables for which instances of the tables in the group being accessed in the same query satisfy a merging criterion, and merging the tables in the group into a single table in the tabular data store.

11. A hybrid data storage system according to any of the preceding claims, wherein the pointer vertex encodes information specifying a table in the tabular data store, and a row and a column within the specified table.

12. A hybrid data storage system according to any of the preceding claims, wherein the tabular data storage system is a distributed storage apparatus comprising a plurality of concurrently accessible tabular data storage units configured to communicate with one another; and/or
wherein the graph data storage system is a distributed storage apparatus comprising a plurality of concurrently accessible graph data storage units configured to communicate with one another and each storing one or more continuous regions of the data graph.

13. A hybrid data storage method comprising:

at a tabular data storage system, storing a table of fixed values;

at a graph data storage system, storing a data graph;

at a multi-storage logic layer, controlling access to each of the tabular data storage system and the graph data storage system via respective access mechanisms;

wherein each of the fixed values in the table occupies a table entry and constrains a property of a vertex in the data graph; and

wherein storing the data graph comprises storing the data graph as a plurality of vertices linked by edges, each edge linking a specified pair of vertices as a subject vertex and an object vertex, the plurality of edges including, for each fixed value, an edge specifying the vertex for which a property is constrained by the fixed value as the subject vertex and a pointer vertex as the object vertex, the pointer vertex encoding a pointer to the table entry occupied by the fixed value.

14. A computer program which, when executed by a network of interconnected computing devices, causes the computing devices to function as the hybrid data storage system as claimed in any of claims 1 to 12.

15. A computer program which, when executed by a network of interconnected computing devices, causes the computing devices to perform the method of claim 13.

10

multi-storage logic layer          16

14

12

**FIGURE 1**

**has_parent**

**has_friend**

**FIGURE 2**

Server 100

| Data Processing Layer 20 | | |
|---|---|---|
| Fault Tolerance 30 | Storage API 16 | |
| | Graph 12 | Tabular 14 |
| Communication Layer 40 | | |

**FIGURE 4**

| PROCESSOR | | MEMORY | |
|---|---|---|---|
| | 993 | | 994 |

992

| | 995 | | 996 | | 997 |
|---|---|---|---|---|---|
| DISPLAY | | INPUT | | NETWORK I/F | |

**FIGURE 5**

Europäisches
Patentamt

European
Patent Office

Office européen
des brevets

# EUROPEAN SEARCH REPORT

Application Number

EP 16 18 2056

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 755 148 A1 (FUJITSU LTD [JP]) 16 July 2014 (2014-07-16) * figures 1, 4, 5 * * column 8, line 43 - line 49 * * column 7, line 51 - line 54 * * paragraph [0038] - paragraph [0039] * * paragraph [0059] - paragraph [0065] * ----- | 1-15 | INV. G06F17/30 |
| A | US 2015/052175 A1 (BORNEA MIHAELA ANCUTA [US] ET AL) 19 February 2015 (2015-02-19) * figures 1-2 * * paragraph [0008] - paragraph [0017] * ----- | 1-15 | |
| A | EP 2 631 817 A1 (FUJITSU LTD [JP]) 28 August 2013 (2013-08-28) * figures 2-6 * * paragraph [0070] - paragraph [0100] * ----- | 1-15 | |
| A | EP 2 894 587 A1 (FUJITSU LTD [JP]) 15 July 2015 (2015-07-15) * figures 1-4 * * paragraph [0045] - paragraph [0081] * ----- | 1-15 | |

TECHNICAL FIELDS
SEARCHED        (IPC)

G06F

The present search report has been drawn up for all claims

| Place of search | Date of completion of the search | Examiner |
|---|---|---|
| Munich | 25 November 2016 | Yotova, Polina |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 18 2056

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2016

| Patent document cited in search report | | Publication date | Patent family member(s) | | Publication date |
|---|---|---|---|---|---|
| EP 2755148 | A1 | 16-07-2014 | EP | 2755148 A1 | 16-07-2014 |
| | | | JP | 2014137820 A | 28-07-2014 |
| | | | US | 2014201234 A1 | 17-07-2014 |
| US 2015052175 | A1 | 19-02-2015 | US | 2015052175 A1 | 19-02-2015 |
| | | | US | 2016203236 A1 | 14-07-2016 |
| EP 2631817 | A1 | 28-08-2013 | CN | 103425734 A | 04-12-2013 |
| | | | EP | 2631817 A1 | 28-08-2013 |
| | | | EP | 2631819 A1 | 28-08-2013 |
| | | | JP | 2013175181 A | 05-09-2013 |
| | | | JP | 2013246828 A | 09-12-2013 |
| | | | US | 2013238667 A1 | 12-09-2013 |
| | | | US | 2014067762 A1 | 06-03-2014 |
| EP 2894587 | A1 | 15-07-2015 | EP | 2894587 A1 | 15-07-2015 |
| | | | JP | 2015133097 A | 23-07-2015 |
| | | | US | 2015193636 A1 | 09-07-2015 |

EPO FORM P0459

For more details about this annex : see Official Journal of the European Patent Office, No. 12/82